# EUROPÄISCHE PATENTSCHRIFT

(11) **EP 0 868 761 B1**
(45) Veröffentlichungstag und Bekanntmachung des Hinweises auf die Patenterteilung: **27.10.1999**
(21) Anmeldenummer: 96946086.4
(22) Anmeldetag: 13.12.1996
(51) Int. Cl.: H01M 8/12

(54) **ELEKTRODENSUBSTRAT FÜR BRENNSTOFFZELLE**
ELECTRODE SUBSTRATE FOR FUEL CELL
SUBSTRAT ELECTRODE POUR PILE A COMBUSTIBLE

(30) Priorität: 20.12.1995 DE 19547700
(43) Veröffentlichungstag der Anmeldung: 07.10.1998
(73) Patentinhaber: FORSCHUNGSZENTRUM JÜLICH GMBH, 52425 Jülich (DE)
(72) Erfinder: NAOUMIDIS, Aristides, D-52428 Jülich (DE); TIETZ, Frank, D-52428 Jülich (DE); STÖVER, Detlev, D-52382 Niederzier (DE)
(86) Internationale Anmeldenummer: DE9602424
(87) Internationale Veröffentlichungsnummer: WO9723007

(56) Entgegenhaltungen:
- EP-A- 0 285 727
- EP-A- 0 414 270
- EP-A- 0 510 820
- EP-A- 0 572 017
- WO-A-93/26055
- CH-A- 515 622
- DE-A- 1 496 223
- DE-A- 4 132 584
- US-A- 4 275 126
- CHEMICAL ABSTRACTS, vol. 116, no. 18, 4.Mai 1992 Columbus, Ohio, US; abstract no. 177638d, SUZUKI, M ET AL: "Development of ruthenium/zirconia SOFC anode" XP000389292 & COMM. EUR. COMMUNITIES, REP EUR 1991, EUR 13564, Seite 585-91

## Beschreibung

Die Erfindung bezieht sich auf eine Elektrode sowie auf einen Brennstoffzellenstapel für eine Brennstoffzelle.

Eine Hochtemperatur-Brennstoffzelle (SOFC) besteht aus einem Brennstoffzellenstapel und der zugehörigen Peripherie. Ein Brennstoffzellenstapel weist mehrere Einheiten, bestehend aus Elektrolyt, Kathode und Anode, auf. Der Elektrolyt ist z. B. aus Yttrium stabilisiertem Zirkoniumdioxid (YSZ) (ZrO₂ - 8 mol% Y₂O₃), die Kathode z. B. aus Strontium dotiertes Lanthanmanganoxid (LSM) (La_{1-x-y}SrₓMnO_{3-z}) und die Anode z. B. aus einer nicht katalytisch wirkenden sowie einer katalytisch wirkenden Phase (z.B. Nickel-YSZ Cermet; 40 Vol-% Ni / 60 Vol-% YSZ) hergestellt. Interkonnektorplatten verbinden mehrere Anode-Elektrolyt-Kathode-Einheiten miteinander.

Es ist aus der deutschen Patentanmeldung, amtliches Aktenzeichen 195 19 847.6-45 (entsprechend der Internationalen Patentanmeldung WO-A 96 388 171 bekannt, selbsttragende Elektrolytfolien und Interkonnektorplatten einzusetzen.

Unter selbsttragender Eigenschaft ist zu verstehen, daß die Folien nicht durchbiegen, wenn sie an einer Stelle angehoben werden. Die beiden Elektroden werden auf der Elektrolytfolie als Schichten aufgetragen. Sowohl die Elektrolytfolie, als auch die Interkonnektorplatte müssen die mechanische Stabilität gewährleisten.

Eine Dicke von ca. 200-300 µm der selbsttragenden Elektrolytfolie ist notwendig, um die mechanische Stabilität zu gewährleisten. Eine dicke Elektrolytschicht hemmt jedoch nachteilhaft den in der Brennstoffzellen stattfindenden Ionentransport durch den Elektrolyten.

Um diesen Mangel zu beheben, ist das Substratkonzept entwickelt worden. Ein poröses Substrat wird aus einem der beiden Elektrodenmaterialien hergestellt und übernimmt die tragende Funktion. Es muß dementsprechend dick angefertigt werden. Hierfür sind Schichtdicken größer als 0,5 mm erforderlich, weil die poröse Schicht eine viel geringere Festigkeit als beispielsweise der Elektrolyt besitzt.

Auf dieses Substrat wird eine sehr dünne Elektrolytschicht und hierauf die zweite Elektrodenschicht aufgebracht. Diese Dreischicht-Zelleinheiten werden zusammen mit den Interkonnektorplatten in Serie zu einem Stack geschaltet.

Nachteilhaft an beiden vorgenannten Konzepten ist, daß für die Herstellung der selbsttragenden Komponente teure Materialien wie YSZ, Cer-Verbindungen oder Lanthan-Verbindungen verwendet werden müssen.

Aufgabe der Erfindung ist die Schaffung einer Elektrode sowie eines Brennstoffzellenstapels, mittels derer die vorgenannten Nachteile vermindert werden können.

Gelöst wird die Aufgabe durch eine Elektrode sowie durch einen Brennstoffzellenstapel mit den Merkmalen der unabhängigen Ansprüche 1 und 4. Vorteilhafte Ausgestaltungen ergeben sich aus den Unteransprüchen.

Die Elektrode weist zwei Schichten auf.

Die eine Schicht verleiht der Elektrode die selbsttragende Eigenschaft. Dieser Zweck kann durch eine entsprechend dicke Schicht von z. B. 1 bis 3 mm erreicht werden. Bei Verwendung eines entsprechend stabilen Materials kann diese jedoch auch erheblich dünner als 1 mm sein. Die Schichtdicke der selbsttragenden Schicht ist mehrfach dicker als die andere.

Die selbsttragende Schicht ist vorteilhaft mechanisch stabiler als die übrigen Elektrodenschichten oder die Elektrolytschicht. Insbesondere auf diese Weise kann teures Material eingespart werden.

Die andere Schicht weist die erforderlichen katalytischen Eigenschaften einer Elektrode in einer Brennstoffzelle auf. Katalysiert wird beispielsweise die Reformierungsreaktion bei interner Reformierung mittels Anode oder die Oxidation des Brennstoffes.

Die tragende Funktion von der katalytischen Funktion einer Elektrode zu trennen, ermöglicht die Verwendung billiger Materialien zur Erzielung der mechanischen Stabilität. Bei den bisherigen Konzepten mußten - wie erläutert - hierfür zwingend teure Materialien verwendet werden.

Alternative, preisgünstige Materialien für die selbsttragende Komponente sollten ferner folgende Kriterien für ihren Einsatz erfüllen:
- keine chemische Wechselwirkung mit dem Interkonnektormaterial und der katalytisch aktiven Anodenschicht,
- chemische Stabilität in Brenngasen verschiedener Zusammensetzung (z. B. CH₄/H₂O, CₙHₘ/ H₂O, H₂/ H₂O),
- Kompatibilität mit den thermophysikalischen Eigenschaften (z. B. thermischer Ausdehnungskoeffizient) der anderen Brennstoffzellen-Komponenten,
- elektrische Leitfähigkeit zur Überbrückung des Elektronentransports zwischen katalytisch aktiver Anodenschicht und Interkonnektor.

Besonders gut können Cermets bestehend aus Ni und Al₂O₃ bzw. Ni und TiO₂ diese Kriterien erfüllen. Geeignete handelsübliche, billige Oxide sind ferner: Cr₂O₃, Fe₂O₃, abgereichertes UO₂.

Die chemischen Eigenschaften von Al₂O₃ und TiO₂ gewährleisten eine ausreichende Langzeitstabilität. Wechselwirkungen mit dem YSZ der katalytisch aktiven Schicht sind nicht bekannt (Al₂O₃)oder nicht schädlich (TiO₂). Die thermischen Ausdehnungskoeffizienten von Al₂O₃ und TiO₂(8,3 * 10⁻⁶ K⁻¹ bzw. 9,1 * 10⁻⁶ K⁻¹) sowie die sich intermediär bildenden Verbindungen NiAl₂O₄ oder NiTiO₃ (8,1 * 10⁻⁶ K⁻¹ bzw. 10,3 * 10⁻⁶ K⁻¹ sind kleiner als die von YSZ (10,5 * 10⁻⁶ K⁻¹) oder einem metallischen Interkonnektor (CrFe5Y₂O₃1: 11,3 * 10⁻⁶ K⁻¹). Durch geeignete Zumischungen von Ni kann der thermische Ausdehnungskoeffizient den anderen Brennstoffzellen-Komponenten angeglichen werden. Z. B. beträgt der thermische Ausdehnungskoeffizient für
Al₂O₃ + 67,8 Vol.-% NiO: 10,49 * 10⁻⁶K⁻¹
Al₂O₃ + 60 Vol.-% Ni: 10,06 * 10⁻⁶K⁻¹
TiO₂ + 59,3 Vol.-% NiO: 11,37 * 10⁻⁶K⁻¹
TiO₂ + 50 VOL.-% Ni: 12,04 * 10⁻⁶K⁻¹

Durch die erhöhte Zumischung von NiO und Reduktion zu Ni wird außerdem eine gute elektrische Leitfähigkeit erzielt.

Durch die Verlagerung von Gaskanälen in die mechanisch stabilisierende Elektrodenschicht kann das Gas vorteilhaft auf kürzerem Wege im Vergleich zum bisherigen Substratkonzept der katalytisch aktiven Schicht zugeführt werden.

Es zeigen
- Fig. 1:: Brennstoffzelleneinheit mit Elektrode
- Fig. 2:: Brennstoffzelleneinheit mit Gaskanälen in der Elektrode

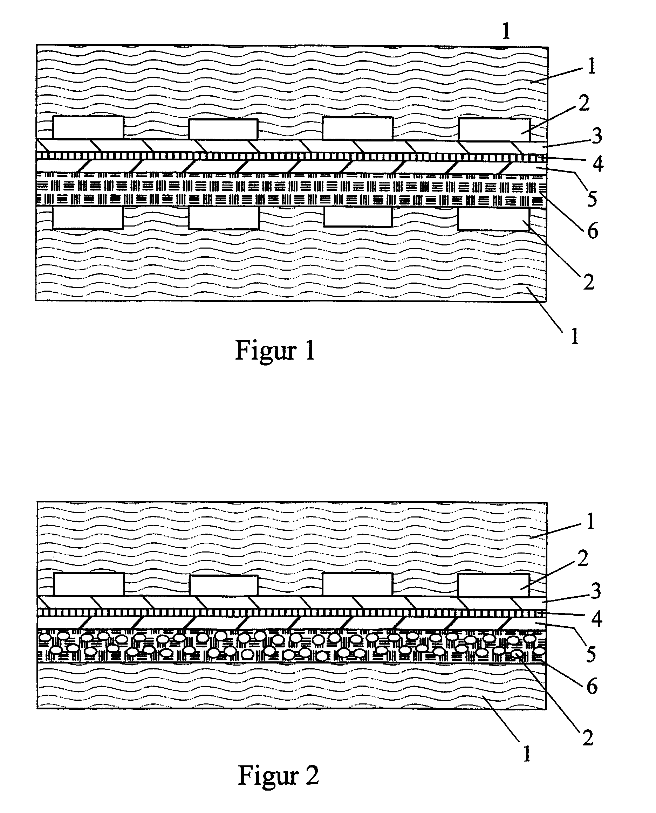

Figur 1 zeigt eine aus Interkonnektoren 1, Gaskanälen 2, Kathode 3, Elektrolyt 4, Anode 5 und 6 bestehende Einheit, die für einen Einsatz in Hochtemperatur-Brennstoffzellen vorgesehen ist.

Wie in Figur 1 und 2 dargestellt, wird bei der hier vorgestellten Anode die tragende von der katalytischen Funktion Örtlich getrennt. Die Herstellung der tragenden sowie der katalytisch aktiven Schicht erfolgt durch gängige Verfahren: ein Ni/Al₂O₃- oder ein Ni/TiO₂-Cermet 6 wird durch Foliengießen und ggf. Laminieren von mehreren gegossenen Folien oder durch das Coat-Mix-Verfahren, die katalytisch aktive Schicht 5 durch Siebdruck oder Naßpulverspritzen hergestellt.

Durch Verlagerung der Gaskanäle 2 von Interkonnektor 1 (Figur 1) in das Innere der tragenden Schicht 6 (Figur 2) erreicht deutlich mehr Brenngas die katalytisch aktive Anodenschicht 5 und führt zu einer Erhöhung des Brenngas-Umsatzes. Die Gaskanäle 2 können beim Herstellen der tragenden Schicht 6 durch Verwendung von beispielsweise Kohlefasern oder vorgefertigten Hartpolymer-Matrizen hergestellt werden. Sowohl beim Coat-Mix-Verfahren als auch beim Foliengießen lassen sich diese ausgedehnten organischen Additive, bestehend aus C, H, O und evtl. N in den Grünkörper einfügen. In einem Verkokungsprozeß wird der Körper vorgesintert, um Formstabilität zu erhalten und anschließend an Luft endgesintert, wobei die organischen Additive verbrennen und eine Kanalstruktur im porösen Substrat zurücklassen.

Da auf diese Weise planparallele Brennstoffzellen-Komponenten zusammengefügt werden, wird nicht nur das Zusammenfügen von Anode und Interkonnektor erleichtert, sondern es wird auch in größerem Umfang teures Interkonnektormaterial gespart.

## Patentansprüche

1. Elektrode für eine Brennstoffzelle mit zwei Schichten (5, 6) mit folgenden Merkmalen:
a) die eine Schicht (6) ist porös und selbsttragend,
b) die andere Schicht (5) weist katalytische Eigenschaften auf,
c) die Schichtdicke der selbsttragenden Schicht (6) ist mehrfach dicker als die Schichtdicke der anderen Schicht (5),
d) die selbsttragende Schicht (6) besteht aus einem Cermet, wobei das Cermet aus Al₂O₃ oder TiO₂ und zugemischtem Ni besteht.

2. Elektrode nach vorhergehendem Anspruch, bei der die selbsttragende Schicht porös ist.

3. Elektrode nach einem der vorhergehenden Ansprüche mit in der dickeren Schicht (6) befindlichen Gaskanälen (2) für die Zuführung von Gas zur katalytisch aktiven Schicht.

4. Brennstoffzellenstapel mit einer Elektrode nach einem der vorhergehenden Ansprüche.

## Claims

1. An electrode for a fuel cell, comprising two layers (5, 6) having the following features:
a) one layer (6) is porous and self-supporting,
b) the other layer (5) exhibits catalytic properties,
c) the layer thickness of the self-supporting layer (6) is many times the layer thickness of the other layer (5),
d) the self-supporting layer (6) consists of a cermet, wherein the cermet consists of Al₂O₃ or TiO₂ and admixed Ni.

2. An electrode according to the preceding claim, wherein the self-supporting layer is porous.

3. An electrode according to either one of the preceding claims, having gas channels (2) situated in the thicker layer (6) for the supply of gas to the catalytically active layer.

4. A fuel cell stack comprising an electrode according to any one of the preceding claims.

## Revendications

1. Electrode pour pile à combustible avec deux couches (5, 6) ayant les caractéristiques suivantes :
a) une couche (6) est poreuse et autoportante,
b) l'autre couche (5) présente des propriétés catalytiques,
c) l'épaisseur de la couche autoportante (6) vaut plusieurs fois l'épaisseur de l'autre couche (5),
d) la couche autoportante (5) est formée d'un cermet, ledit cermet étant formé de Al₂O₃ ou de TiO₂ et de Ni ajouté.

2. Electrode selon la revendication précédente, dans laquelle la couche autoportante est poreuse.

3. Electrode selon l'une des revendications précédentes avec des canaux pour gaz (2) situés dans la couche plus épaisse (6) pour l'amenée de gaz vers la couche catalytiquement active.

4. Empilement de piles à combustible avec une électrode selon l'une des revendications précédentes.
